# EUROPEAN PATENT APPLICATION

(11) **EP 3 223 243 A1**
(43) Date of publication of application: **27.09.2017**
(21) Application number: 16305336.6
(22) Date of filing: 24.03.2016
(51) Int. Cl.: G06T 13/80, G06F 3/0484, G06T 3/00

(54) **DISCRETE AND CONTINUOUS SELECTION INTERFACE**

(71) Applicant: Ecole Nationale de l'Aviation Civile, 31400 Toulouse Cedex (FR)
(72) Inventor: HURTER, Christophe, 31000 Toulouse (FR)
(74) Representative: Bell, Mark

(57) **Abstract**

In order to browse between a collection of datasets susceptible of graphical representation, these datasets are associated with points on a sliding scale of one, two or three dimensions. When a point corresponding to a particular dataset is selected by a user via a mouse pointer etc. it is rendered as a graphical representation and presented to the user. When an intermediate point is selected, a interpolation of the datasets corresponding to the nearby points is generated and the resulting dataset rendered as a graphical representation and presented to the user. The interaction may be implemented with a slider bar type widget having hybrid behaviour such that clicking on the bar causes the button to jump to the nearest point corresponding to a data, while sliding to a chosen intermediate position activates the interpolation of adjacent datasets.

## Description

### Field of the invention

The present invention relates to a Human Device Interface mechanism.

### Background of the invention

Volumetric datasets are found in many fields, such as engineering, material sciences, medical imaging, astrophysics. The exploration of volumetric datasets is not trivial, and is heavily impacted by the specific needs of users. In most airports for example, security agents deal with such data exploration in the context of baggage inspections. X-ray and tomography are two commonly used fluoroscopic scanning systems. X-ray systems provide a flattened 2D luggage scan while tomography systems produce transversal scans, also called slices. Thanks to data processing techniques such as the Radon transform, these systems can produce a full 3D scan, comprising a set of voxels with corresponding density data. Since the resulting X-ray scanned image only contains voxel or pixel densities, it cannot display the original material colours. The standard colour visual mapping uses three different colours (orange, green, and blue) to display the data density. Orange colour corresponds to low density (mainly organic items). In opposition, blue colour is used for high density values (i.e. metal). In the case of X-ray systems, green colour corresponds to the superposition of different kinds of materials or average density materials.

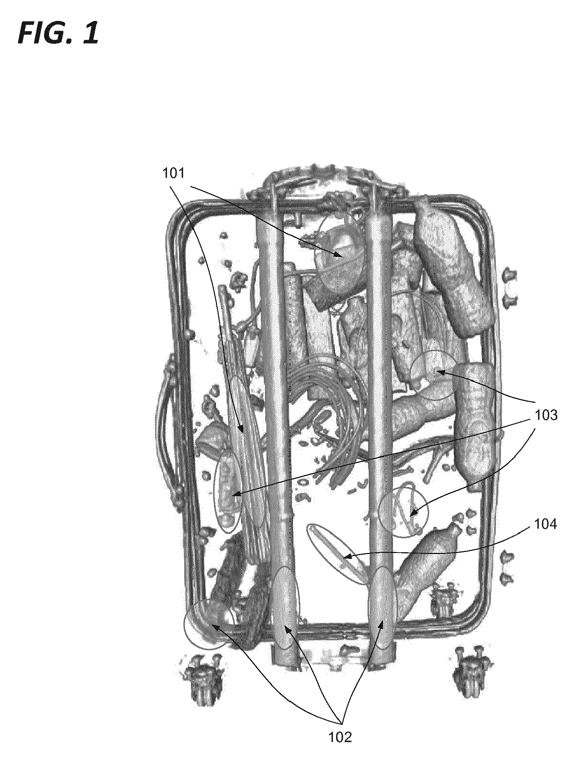

Figure 1 demonstrates some of the ways in which an article may be obscured in a scan. As shown in figure 1, the displayed 2D scanned image can suffer from four issues:
**Superposition:** A threat (e.g. prohibited object like knife, cutter...) may be sheltered behind dense materials. Sometimes, it's possible to see through this blind shield using functionalities such as high penetration (enhanced X-ray power) or image processing (contrast improvement). As shown in figure 1, the umbrella and dense collection of objects in the upper right hand corner 101 may obscure articles of interest.
**Location:** Depending on its location inside the luggage, a threat can be difficult to detect. Objects located in the corners, in the edges or inside the luggage's frame are very difficult to identify. As shown in figure 1, the retractable trolley bars and the rigid corners of the case 102 may obscure articles of interest.
**Dissociation:** Another way to dissimulate a threat is to separate and to spread parts of it in the luggage (weapons or explosives are composed of many separated items like the trigger, the barrel...). This dissociation can be combined with other dissimulation techniques. As shown in figure 1, a number of apparently non-descript items 103 are present which are unlikely to attract particular attention, but which may be assembled to form some article of interest.
**Lure:** An ill-intentioned individual may use a lure to hide the real threat. For instance, a minor threat like a small scissors may be clearly visible and catch security agent's attention while a more important threat remains hidden. As shown in figure 1, the metal rod 104 may attract the attention of the user, drawing it away from some less visible threat.

Volumetric data exploration with direct volume rendering techniques is of great help to visually extract relevant structures in many fields of science: medical imaging, astrophysics and more recently in luggage security. To leverage this knowledge extraction, many techniques have been developed. A number of existing basic technologies are known in this field, including volume visualization, transfer function, direct voxel manipulation and focus plus context interaction.

In particular, volume visualization can be done with geometric rendering system which transforms the data into a set of polygons representing an iso-surface. The contour tree algorithm and other alternatives such as branch decomposition are usually used to find these iso-surfaces. Contour tree algorithms may be vulnerable to noise, which can be problematic in luggage inspections since dense materials such as steel cause noise by reflecting the X-rays.

In order to investigate volumetric dataset, one can use the Transfer Function (TF). In practice, this maps the voxel density with a specific colour (including its transparency). Transfer functions can be 1, 2 or n dimensional and are of great help to isolate structures of interest in volumetric data. Thanks to the colour blending process, a suitable transfer function can also reveal iso-surfaces or hide density to improve the volumetric data visualization.

A specific difficulty that arises in an environment such as that described with respect to figure 1 is that the user's view of a particular article of interest will often be obscured by a number of other objects of no interest. In order to better view the objects of interest, the user will navigate the environment, to find better viewing points. As the user navigates the three dimensional environment he will generate a continuous flow of images representing his exploration, and will often wish to review his exploration, or back track to an earlier point of view. It is desirable to provide a convenient interface mechanism for such interactions.

### Summary of the invention

In accordance with a first aspect there is provided a method of controlling the display of representation of a plurality of datasets, comprising the steps of establishing a scale mapping to the plurality of datasets, with each dataset being associated with a respective dataset position on said scale. A user input specifying a position in the scale is received, and it is determined whether the specified position is within a predetermined region associated with any one of the respective dataset positions.

In a case where said specified position does not fall within any predetermined region, the method interpolates between two datasets associated with the positions on either side of the user input, and displays a graphical representation of said interpolated dataset. Otherwise, the method displays a graphical representation of the dataset associated with the predetermined region within which the first user input lies. ]

This mode of interaction thus give the user a choice between a granular mode of interaction and a smooth mode, even where the underlying data does not directly support one or other of these modes. This in turn supports a more intuitive and rapid manipulations by the user, reducing interaction times and thereby resource requirements.

In accordance with a development of the first aspect, the plurality of datasets are snapshots of previous images displayed to a user. This supports a direct and intuitive access to a set of images. The interpolation between adjacent images where an intermediate position is selected means that a continuous selection is supported even where no image actually exists for the selected position. By providing a structure combining real and synthesized images, equivalent benefits to a far larger data set are provided without the associated processing and storage costs. In accordance with a development of the first aspect, the plurality of datasets comprise a sequential set, and wherein said scale maps to said plurality of datasets in the same sequence as the sequence of said datasets.

This supports a direct and intuitive access to a timeline or other sequential set of images. The interpolation between adjacent images where an intermediate position is selected means that a continuous selection is supported without the need to store data for every possible selection, thereby reducing system storage demands.

In accordance with a development of the first aspect, the scale is two dimensional. Introducing a second degree of freedom multiplies the benefits described above in terms of accelerated access time and reduced system demands.

In accordance with a development of the first aspect, the plurality of datasets comprise a set reflecting sequences of values for two variables, and wherein the scale maps the plurality of datasets to the scale in a first dimension according to the respective value of each dataset for a first variable, and wherein the scale maps the plurality of datasets to the scale in a second dimension according to the respective value of each dataset for a second variable.

In accordance with a development of the first aspect, the scale is three dimensional.

In accordance with a development of the first aspect, the plurality of datasets comprise a set reflecting sequences of values for three variables, and wherein the scale maps the plurality of datasets to the scale in a first dimension according to the respective value of each dataset for a first said variable, wherein the scale maps said plurality of datasets to the scale in a second dimension according to the respective value of each dataset for a second said variable, and wherein the scale maps the plurality of datasets to the scale in a third dimension according to the respective value of each dataset for a third variable.

In accordance with a development of the first aspect, the user input is provided via a slider bar type graphical user interface widget. The use of this familiar interface feature can accelerate user adoption and foster intuitive interaction with the In accordance with a development of the first aspect, the slider bar type graphical user interface widget furthermore exhibits a plurality of discrete positions, each discrete position corresponding to the center of a respective predetermined region associated with a respective representation.

In accordance with a development of the first aspect, a "click" operation on the slider bar type graphical user interface widget is translated into a first user input value corresponding to the position of whichever discrete position is closest to the location of the click operation, and a "click and slide" operation on said slider permits the selection of any position on said slider bar type graphical user interface widget is translated into a first user input value corresponding to the position on the slider at which the click and slide operation terminates.

In accordance with a second aspect there is provided a computer program adapted to implement the steps of the first aspect.

In accordance with a third aspect there is provided a computer readable medium incorporating the computer program of the second aspect.
In accordance with a fourth aspect there is provided a graphical user interface widget for controlling the display of representation of a plurality of datasets, said graphical user interface representing a scale mapping to said plurality of datasets, with each said dataset being associated with a respective dataset position on said scale, said graphical user interface widget being responsive to user inputs to specifying a position in said scale, whereby in a case where said specified position does not fall within any predetermined region associated with any one of said respective dataset positions, prompting an interpolation between two datasets associated with the positions on either side of said user input, and the displaying of a graphical representation of said interpolated dataset, or otherwise, prompting the display a graphical representation of said dataset associated with said predetermined region within which said first user input lies.

### Brief Description of the Drawings

The above and other advantages of the present invention will now be described with reference to the accompanying drawings, in which:
Figure 1 demonstrates some of the ways in which an article may be obscured in a scan;
Figure 2 shows an interface feature in accordance with an embodiment;
Figure 3a shows a first interaction with the interface feature of figure 2 in accordance with an embodiment;
Figure 3b shows a second interaction with the interface feature of figure 2 in accordance with an embodiment;
Figure 3c shows a first interaction with the interface feature of figure 2 in accordance with an embodiment;
Figure 4a shows a second interaction with the interface feature of figure 2 in accordance with an embodiment;
Figure 4b shows a second interaction with the interface feature of figure 2 in accordance with an embodiment;
Figure 4c shows a second interaction with the interface feature of figure 2 in accordance with an embodiment;
Figure 5a shows a third interaction with the interface feature of figure 2 in accordance with an embodiment;
Figure 5b shows a third interaction with the interface feature of figure 2 in accordance with an embodiment;
Figure 6 shows the steps of a method in accordance with an embodiment;
Figure 7 shows a first implementation of the method of figure 6 in a slider bar widget;
Figure 8 shows a two dimensional embodiment;
Figure 9 shows a generic computing system suitable for implementation of embodiments of the invention;
Figure 10 shows a smartphone device adaptable to constitute an embodiment;
Figure 11 shows an object scanner system adaptable to constitute an embodiment; and
Figure 12 shows a body scanner system adaptable to constitute an embodiment.

### Detailed description

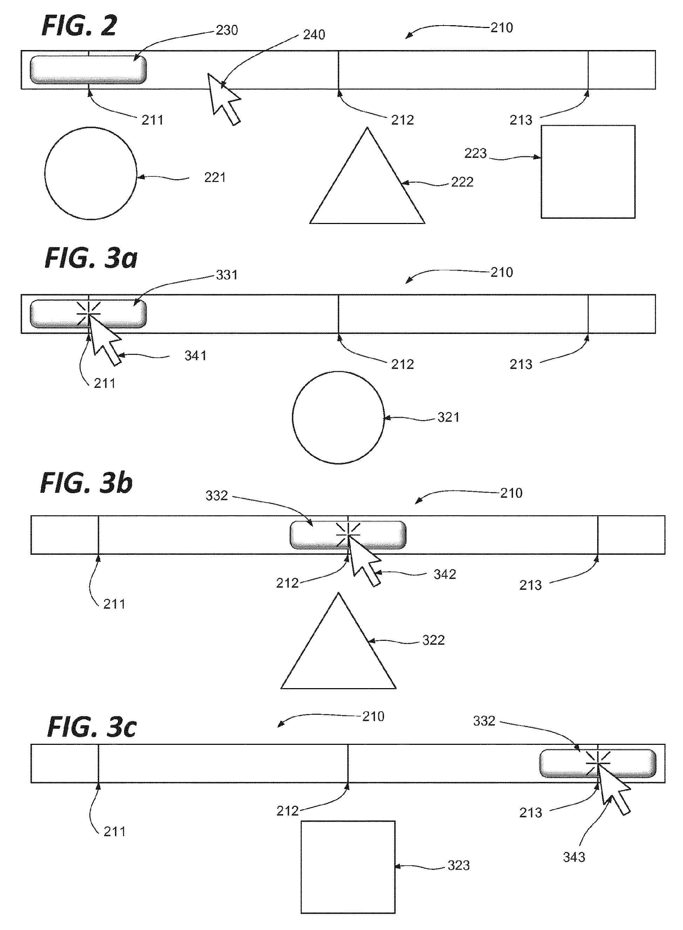

Figure 2 shows an interface feature in accordance with an embodiment. As shown in figure 2, there is provided a slider bar type interface 210, having a scale comprising three positions 211, 212, 213. Each position 211, 212, 213 is associated with a respective representation of a dataset 221, 222, 223. For the sake of simplicity, these three representations are shown as a circle 221, a triangle 222 and a square 223. While these simple geometric shapes have been retained for the sake of simplicity, in other implementations the datasets, and corresponding representation may be more complex. In particular, the data sets may correspond to scanner datasets as described above, and the corresponding representation may resemble that of figure 1, for example. It will be appreciated that any number of such positions may be defined. A cursor 240, which may be controlled by mouse, touchpad, touchscreen or any suitable interface as described herein or otherwise is shown as a means for interacting with the interface feature, although it will appreciated that depending on the implementation platform a different cursor, a plurality of cursors, or no cursor at all may be needed.

Figure 3a shows a first interaction with the interface feature of figure 2 in accordance with an embodiment. As shown in figure 3a, a user has caused a "click" interaction via the cursor 341 to coincide with the position of the first scale position 211 on the interface 210. The button 331 has moved to align itself with the position of the first scale position 211 on the interface 210. In accordance with the process of the present invention as described in more detail below, the graphical representation is that corresponding to the dataset associated with the first scale position, the circle 321.

Figure 3b shows a second interaction with the interface feature of figure 2 in accordance with an embodiment. As shown in figure 3b, a user has caused a "click" interaction via the cursor 342 to coincide with the position of the second scale position 212 on the interface 210. The button 332 has moved to align itself with the position of the second scale position 212 on the interface 210. In accordance with the process of the present invention as described in more detail below, the graphical representation is that corresponding to the dataset associated with the first scale position, the triangle 322.

Figure 3c shows a first interaction with the interface feature of figure 2 in accordance with an embodiment. As shown in figure 3c, a user has caused a "click" interaction via the cursor 343 to coincide with the position of the first scale position 213 on the interface 210. The button 333 has moved to align itself with the position of the third scale position 213 on the interface 210. In accordance with the process of the present invention as described in more detail below, the graphical representation is that corresponding to the dataset associated with the first scale position, the square 323.

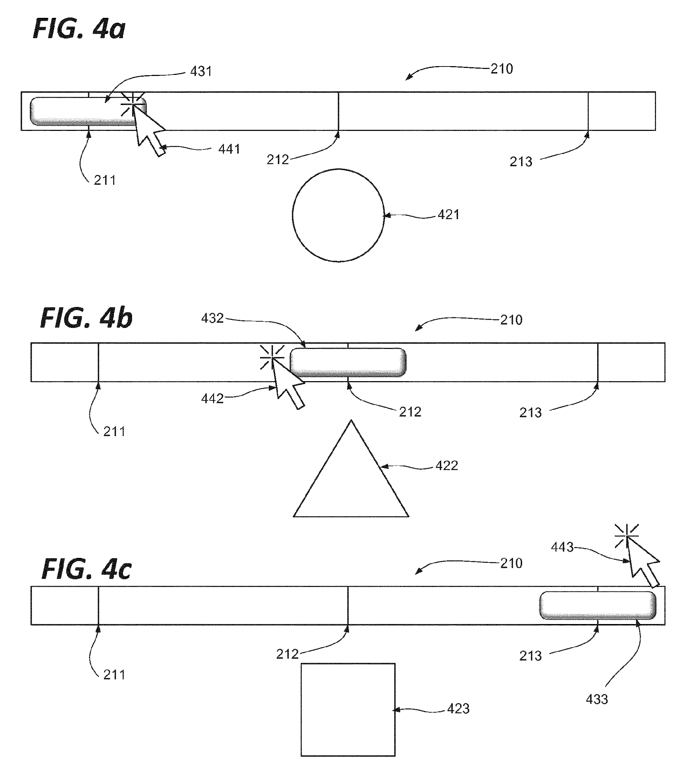

Figure 4a shows a second interaction with the interface feature of figure 2 in accordance with an embodiment. As shown in figure 4a, a user has caused a "click" interaction via the cursor 441 in the vicinity of the position of the first scale position 211 on the interface 210. The button 431 has moved to align itself with the position of the first scale position 211 on the interface 210. In accordance with the process of the present invention as described in more detail below, the graphical representation is that corresponding to the dataset associated with the first scale position, the circle 421.

Figure 4b shows a second interaction with the interface feature of figure 2 in accordance with an embodiment. As shown in figure 4b, a user has caused a "click" interaction via the cursor 442 in the vicinity of the position of the second scale position 212 on the interface 210. The button 432 has moved to align itself with the position of the second scale position 212 on the interface 210. In accordance with the process of the present invention as described in more detail below, the graphical representation is that corresponding to the dataset associated with the first scale position, the triangle 422.

Figure 4c shows a second interaction with the interface feature of figure 2 in accordance with an embodiment. As shown in figure 4c, a user has caused a "click" interaction via the cursor 443 in the vicinity of the position of the first scale position 213 on the interface 210. The button 433 has moved to align itself with the position of the third scale position 213 on the interface 210. In accordance with the process of the present invention as described in more detail below, the graphical representation is that corresponding to the dataset associated with the first scale position, the square 423.

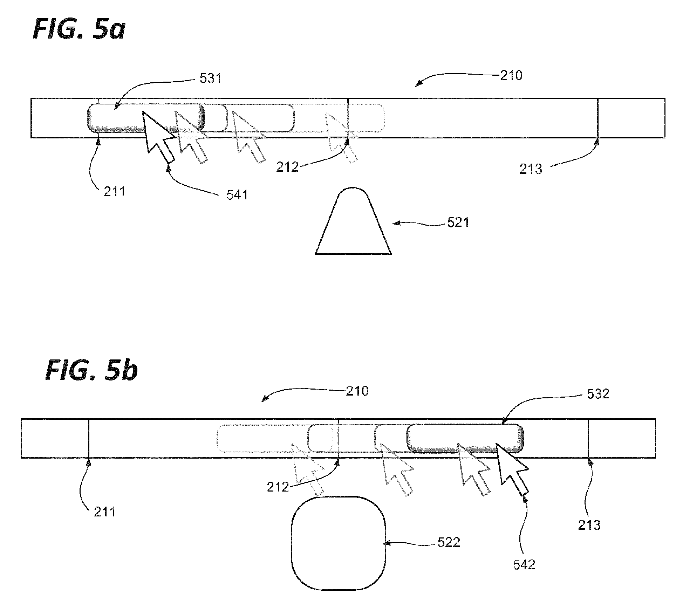

Figure 5a shows a third interaction with the interface feature of figure 2 in accordance with an embodiment. As shown in figure 5a, a user has caused a "click and drag" interaction via the cursor 541 to "pull" the button 531 to a position between the first scale position 211 and the second scale position 212 on the interface 210. In accordance with the process of the present invention as described in more detail below, the graphical representation show 521 represents an interpolation between the datasets associated with the respective scale positions on either side of the button position, i.e. a shape half way between a square and a triangle.

Figure 5b shows a third interaction with the interface feature of figure 2 in accordance with an embodiment. As shown in figure 5b, a user has caused a "click and drag" interaction via the cursor 542 to "pull" the button 532 to a position between the third scale position 213 and the second scale position 212 on the interface 210. In accordance with the process of the present invention as described in more detail below, the graphical representation 522 shown represents an interpolation between the datasets associated with the respective scale positions on either side of the button position, i.e. a shape half way between a square and a circle.

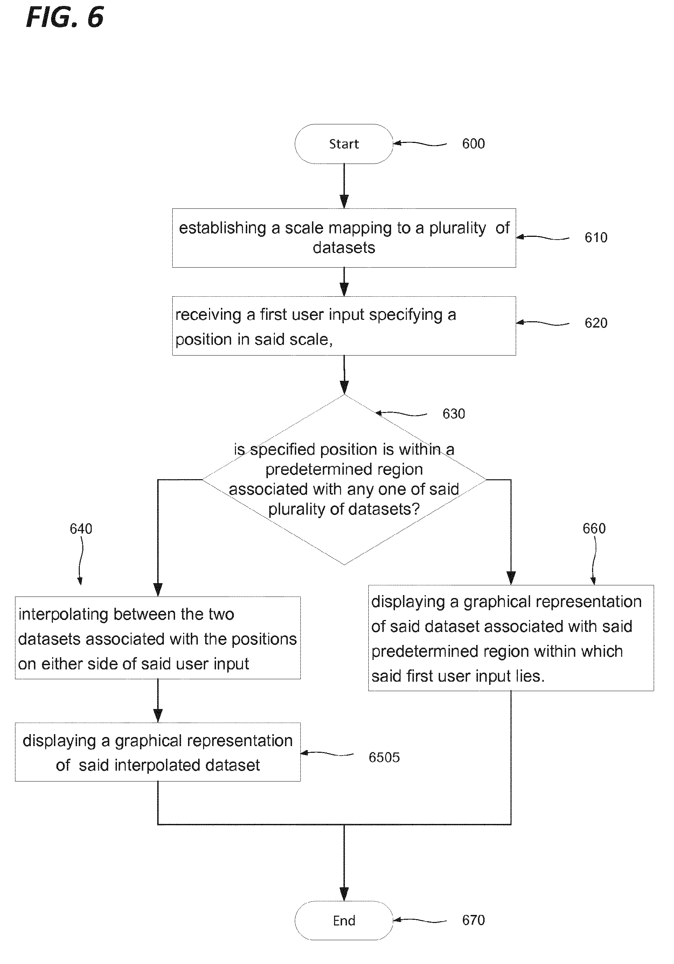

Accordingly, as described above with reference to figures 3, 4 and 5, there is provided a method of controlling the display of representations of a plurality of datasets, comprising the steps as described below with respect to figure 6.

Figure 6 shows the steps of a method in accordance with an embodiment. As shown in figure 6, the methods starts at step 600 before proceeding to step 610, at which a scale representing a collection of said plurality of datasets is established, with each dataset in said plurality of datasets being associated with a respective region on said scale. The method next proceeds to step 620, of receiving a first user input specifying a position in said scale, and then determining ate step 630 whether said specified position is within any said region associated with any one of said plurality of datasets.

In a case where the specified position does not fall within any said predetermined region, the method proceeds to step 640 of interpolating between the two datasets associated with the positions on either side of said user input, and then displaying a graphical representation of the interpolated dataset at step 650 before terminating at step 670. If, at step 630, it is determined that the specified position does fall within a predetermined region, the method proceeds to step 660, of displaying a graphical representation of the dataset associated with said predetermined region within which said first user input lies.

The representations may be snapshots of previous images displayed to a user for example during the exploration of a 3d computer generated environment as discussed above, in which case said step of interpolation may involve polynomial interpolation or other inbetweening techniques and/ or morphing techniques.

Alternatively, the representations may define camera positions and orientations within said three dimensional space, in which case the interpolation may comprise determining a position and orientation that is geometrically intermediate between the two adjacent datasets, and generating the view of the 3d environment corresponding to that view.

Regardless of the interpolation technique applied, the interpolated dataset need not correspond to an equal combination of the two adjacent datasets. In certain embodiments, the two adjacent datasets may be subject to different weightings, which may for example be proportional to the respective distances of the user selected position from the centers of the two adjacent regions, so that whichever of the two is closest to the user's selection is given greater prominence in the interpolated dataset.

In certain embodiments the user input may be provided via a slider bar type graphical user interface widget, for example as described with respect to figures 2 to 5.

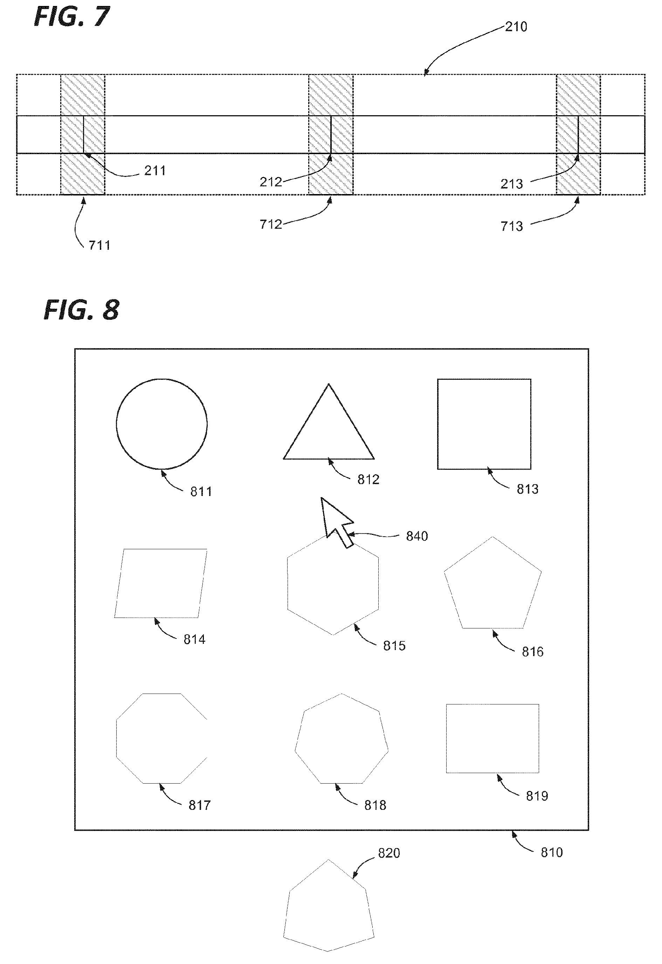

Figure 7 shows a first implementation of the method of figure 6 in a slider bar widget.

As shown in figure 7, there is provided a slider bar 210 having positions 211, 212, 213 as described above. The user performing a click operation anywhere in the space associated with the widget 210 will cause the slider button (not shown) to move to the point 211, 212, 213 closest to the position clicked, and the steps 620, 630, 660 described above will then be performed as described above. Meanwhile, each position 211, 212, 213 is associated with a respective region 721, 722, 723. If the user performs a "click and drag" operation terminating within any of these regions, the slider button (not shown) to move to the corresponding point 211, 212, 213 lying within the region clicked, and the steps 620, 630, 660 described above will then be performed as described above. Finally, if the user performs a "click and drag" operation terminating outside the regions 721, 722, 723, the slider button (not shown) will move to the point on the slider bar corresponding on the axis of the slider bar to the position at which the drag operation terminates, regardless of the position at which the operation terminates in axes perpendicular to the axis of the slider bar, and the steps 620, 630, 640, 659 will then be performed as described above.

It will be appreciated that the regions 721, 722, 723 may be of any size with respect to the sliding scale. In particular, in certain embodiments they may be of equal width to the positions 211, 212, 213, which may be one pixel, twip etc.

Accordingly the slider bar type graphical user interface widget 210 may furthermore exhibit a plurality of discrete positions 211, 212, 213, each said discrete position associated with a respective dataset.

Furthermore, a "click" operation on the slider bar type graphical user interface widget may be translated into a first user input value corresponding to the position of whichever discrete position is closest to the location of said click operation, and a "click and slide" operation on the slider permits the selection of any position on said slider bar type graphical user interface widget is translated into a first user input value corresponding to the position on said slider at which said click and slide operation terminates.

Although the slider bar is a convenient and familiar implementation supporting the functions of the present invention, and as such is used for the foregoing example, it will be appreciated that there are many other interface mechanisms which may be adapted to provide equivalent functions.

It may be desirable to provide thumbnail representations of associated datasets, and such representations may indeed replace the slider bar altogether.

In certain embodiments, the datasets may correspond to a sequential set representing a particular path through a space, a progression of variable values or a chronological sequence for example. In such cases, the scale may map to the plurality of datasets in the same sequence as the sequence of said datasets. For example, if the datasets represent sequential images in a cinematographic work, they may be mapped in the same order to positions on the scale. In other embodiments, the datasets may have no interrelation.

Furthermore, the present invention is not limited to one dimensional implementations as described with respect to figures 2, 3, 4, 5 and 7.

Figure 8 shows a two dimensional embodiment.

As shown in figure 8, there is provided a two dimensional three by three matrix of images 811, 812, 813, 814, 815, 816, 817, 818, 819 in a two dimensional space 810. A cursor 840 may be displaced freely over the images, and in accordance with the method of Figure 6 of receiving a first user input specifying a position in said scale, which in the case of the present invention will comprise two dimensional coordinates, and then determining whether the specified position is within any region associated with any one of said plurality of the nine datasets corresponding to the nine images. In the case of the present embodiment, the region associated with each dataset may be the area of the image itself, a point at the center of the image, a circle or square centered on the center of the image of any size desired, or otherwise.

In a case where position specified by the cursor does not fall within any predetermined region, the method proceeds to step 640 of interpolating between the two datasets associated with the positions on either side of said user input, and then displaying a graphical representation of the interpolated dataset at step 650 before terminating at step 670. In the case of the present embodiment, the positions on either side of the user input may be the two positions closest to the cursor. Alternatively, the interpolation may occur between more than two datasets, for example in a two dimensional matrix such as that of the present invention, the interpolation may be carried out between the four points nearest to the selected point.

By way of illustration, the cursor 840 is shown mid way between shapes 815, a hexagon, and 812, a triangle. As such, the interpolated image 820 represents a shape midway between a triangle and hexagon. The different type of dataset and corresponding image, and different methods of interpolation described above with reference to figures 3, 4 and 5 are equally applicable in the present embodiment.

Although no slider is shown in figure 8, it will be appreciated that a slider like that of figure 3 may easily be added for each axis, or a two dimensional slider provided, either instead of or in addition to the images of figure 8.

It will be appreciated that in a two dimensional arrangement such as that of figure 8, the images need not be arranged in a matrix manner- they may be situated anywhere in the space 810. For example, the two dimensions might be defined as representing some variables relevant to the exploration process, such a time on the y axis, so that the most recent images are near the top, and distance on the x axis, putting the images corresponding to positions closest to the current position appear on the left of the space. Other variables may be used, and may be plotted in a polar coordinate system, depending on the nature of the datasets and the purpose of the interface.

One and two dimensional embodiments have been described above with reference to figures 2, 3,4, 5, 7 and 8, however the skilled person will recognize that the method of figure 6, and the different variants and alternatives described above can be equally adapted to three dimensional embodiments.

Accordingly there is provided a graphical user interface widget for controlling the display of representation of a plurality of datasets, where the graphical user interface represents a scale mapping to said plurality of datasets, with each dataset being associated with a respective dataset position on the scale. The graphical user interface widget is responsive to user inputs to specify a position on the scale, whereby in a case where the specified position does not fall within any predetermined region associated with any one of said respective dataset positions, prompting an interpolation between two datasets associated with the positions on either side of said user input, and the displaying of a graphical representation of said interpolated dataset, or otherwise, prompting the display a graphical representation of said dataset associated with said predetermined region within which said first user input lies. Such a widget may implement any of the embodiments described above.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.
In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a computer or any other device with processing capability, such as a robot or other connected device.

In accordance with certain embodiments, in order to browse between a collection of datasets susceptible of graphical representation, these datasets are associated with points on a sliding scale of one, two or three dimensions. When a point corresponding to a particular dataset is selected by a user via a mouse pointer or the like. it is rendered as a graphical representation and presented to the user. When an intermediate point is selected, an interpolation of the datasets corresponding to the nearby points is generated and the resulting dataset rendered as a graphical representation and presented to the user. The interaction may be implemented with a slider bar type widget having hybrid behaviour such that clicking on the bar causes the button to jump to the nearest point corresponding to a data, while sliding to a chosen intermediate position activates the interpolation of adjacent datasets.

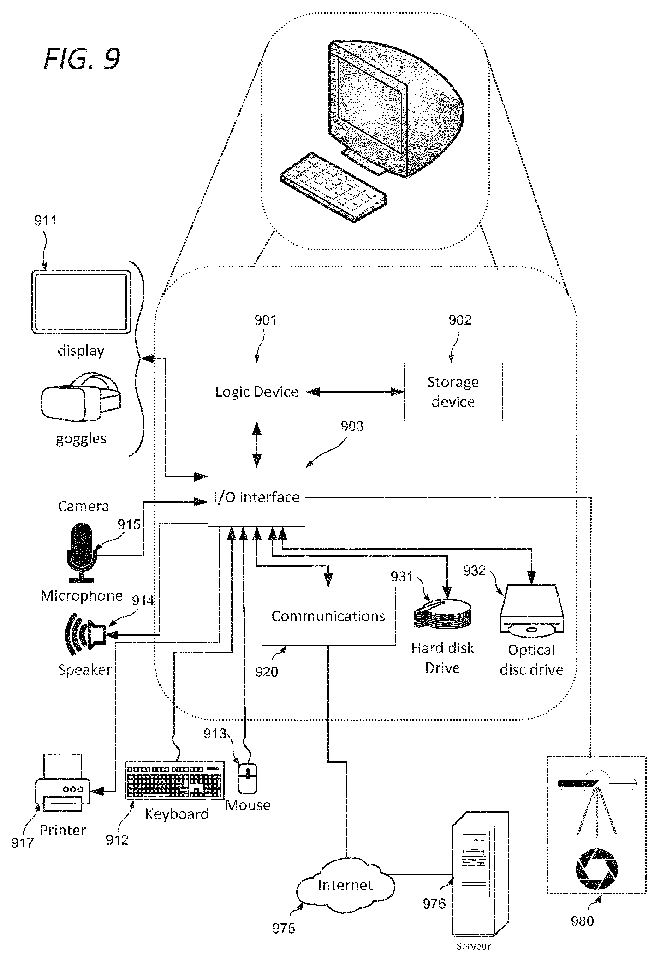

Figure 9 shows a generic computing system suitable for implementation of embodiments of the invention.

A shown in figure 9, a system includes a logic device 901 and a storage device 902. The system may optionally include a display subsystem 911, input subsystem 912, 913, 914, communication subsystem 920, and/or other components not shown.

Logic device 901 includes one or more physical devices configured to execute instructions. For example, the logic device 901 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 901 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 901 optionally may be distributed among two or more separate devices, which may be remotely located and/or configured for coordinated processing. Aspects of the logic device 901 may be virtualized and executed by remotely accessible, networked computing devices configured in a cloud-computing configuration.

Storage device 902 includes one or more physical devices configured to hold instructions executable by the logic device to implement the methods and processes described herein. When such methods and processes are implemented, the state of storage 902 device may be transformed - e.g., to hold different data.

Storage device 902 may include removable and/or built-in devices. Storage device 902 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, nonvolatile, dynamic, static, read/write, read-only, random-access, sequential-access, location-addressable, file-addressable, and/or content-addressable devices.

In certain arrangements, the system may comprise an interface 903 adapted to support communications between the Logic device 901 and further system components. For example, additional system components may comprise removable and/or built-in extended storage devices. Extended storage devices may comprise one or more types of storage device including optical memory 932 (e.g., CD, DVD, HD-DVD, Blu-Ray Disc, etc.), semiconductor memory (not shown) (e.g., RAM, EPROM, EEPROM, FLASH etc.), and/or magnetic memory 931 (e.g., hard-disk drive, floppy-disk drive, tape drive, MRAM, etc.), among others. Such extended storage device may include volatile, nonvolatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 901 and storage device 902 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc. The cursor 340 etc. May be controlled by the mouse 913, touchscreen 911, etc.

In particular, the system of figure 6 may be used to implement embodiments of the invention.

For example a program implementing the steps described with respect to figure 6 may be stored in storage device 902 and executed by logic device 901. Data used for the creation of the graphical representation of the datasets may be stored in storage 902 or the extended storage devices 932 or 931 and the display 911 used to display the graphical representation.

In some cases, the computing system may comprise or be in communication with a scanner 980 or other three dimensional imaging system as described above. This communication may be achieved by wired or wireless network, serial bus, firewire, Thunterbolt, SCSI or any other communications means as desired. In such cases, a program for the control of the scanner 980 and/or the retrieval of data therefrom may run concurrently on the logic device 901, or these features may be implemented in the same program as implementing the steps described with respect to figure 6.

Accordingly the invention may be embodied in the form of a computer program.

Furthermore, when suitably configured and connected, the elements of figure 9 may constitute an apparatus adapted to generate a graphical representation of a dataset, and cause a display device to display said representation; this apparatus may further be adapted to receive data from an eye tracking system indicating a point of regard. The apparatus may comprise storage for compiling a record of the point of regard over a duration, and the apparatus may further be adapted to modify the graphical representation to indicate the proportion of the duration for which said point of regard was directed at each point in said representation. This point of regard may then be assimilated to the selected point and/or the cursor as described above.

It will be appreciated that a "service", as used herein, is an application program executable across multiple user sessions. A service may be available to one or more system components, programs, and/or other services. In some implementations, a service may run on one or more server-computing devices.

When included, display subsystem 911 may be used to present a visual representation of data held by a storage device. This visual representation may take the form of a graphical user interface (GUI). As the herein described methods and processes change the data held by the storage device 902, and thus transform the state of the storage device 902, the state of display subsystem 911 may likewise be transformed to visually represent changes in the underlying data. Display subsystem 911 may include one or more display devices utilizing virtually any type of technology for example as discussed above. Such display devices may be combined with logic device and/or storage device in a shared enclosure, or such display devices may be peripheral display devices.

When included, input subsystem may comprise or interface with one or more user-input devices such as a keyboard 912, mouse 911, touch screen 911, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 920 may be configured to communicatively couple computing system with one or more other computing devices. For example, communication module of may communicatively couple computing device to remote service hosted for example on a remote server 676 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 974, or a wired or wireless local- or wide-area network. In some embodiments, the communication subsystem may allow computing system to send and/or receive messages to and/or from other devices via a network such as the Internet 975. The communications subsystem may additionally support short range inductive communications with passive devices (NFC, RFID etc).

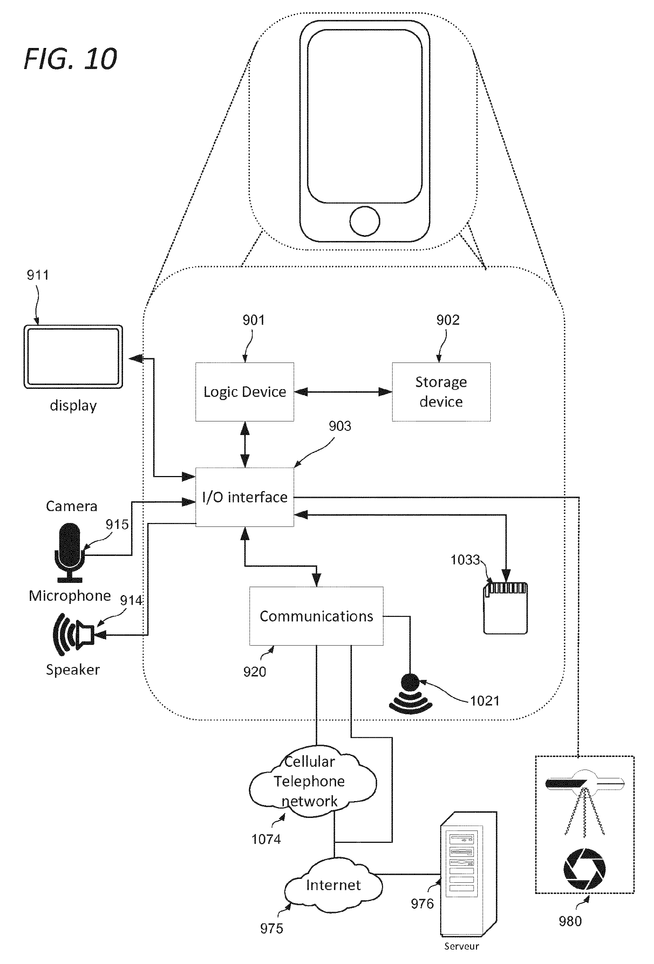

The system of figure 9 is intended to reflect a broad range of different types of information handling system. It will be appreciated that many of the subsystems and features described with respect to figure 9 are not required for implementation of the invention, but are included to reflect possible systems in accordance with the present invention. It will be appreciated that system architectures vary widely, and the relationship between the different sub-systems of figure 9 is merely schematic, and is likely to vary in terms of layout and the distribution of roles in systems. It will be appreciated that, in practice, systems are likely to incorporate different subsets of the various features and subsystems described with respect to figure 9. Figures 10, 11 and 12 disclose further example devices in accordance with the present invention. Those of ordinary skill in the art will appreciate that systems may be employed in the future which also operate in accordance with the present invention.

Figure 10 shows a smartphone device adaptable to constitute an embodiment. As shown in figure 10, the smartphone device incorporates elements 901, 902, 903, 920, near field communications interface 1021, flash memory 1033, elements 914, 915, and 911 as described above. It is in communication with the telephone network 1074 and a server 976 via the network 975. The device may also be in communication with the scanner device 980. The features disclosed in this figure may also be included within a tablet device as well.

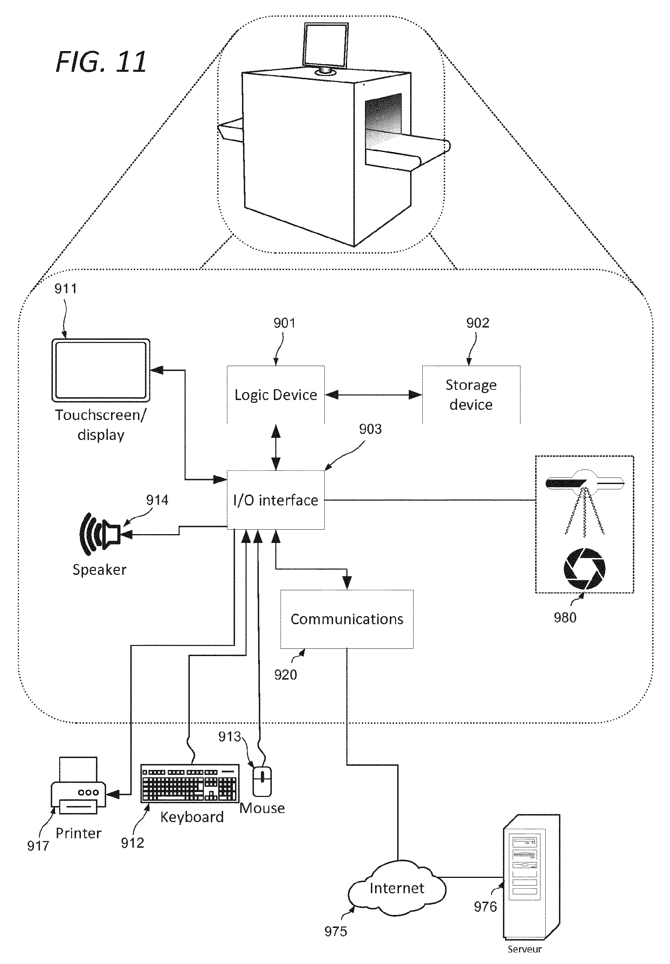

Figure 11 shows an object scanner system adaptable to constitute an embodiment. This is representative of the devices used in airports and the like for scanning baggage and other articles for concealed weapons or contraband. As shown in figure 11, object scanner system comprises elements 901, 902, 903, 920, 921, 933, 914, 915, 916, 960 and 921 as described above. It may be in communication with a server 976 via the network 975. The device is also in communication with the scanner hardware 980.

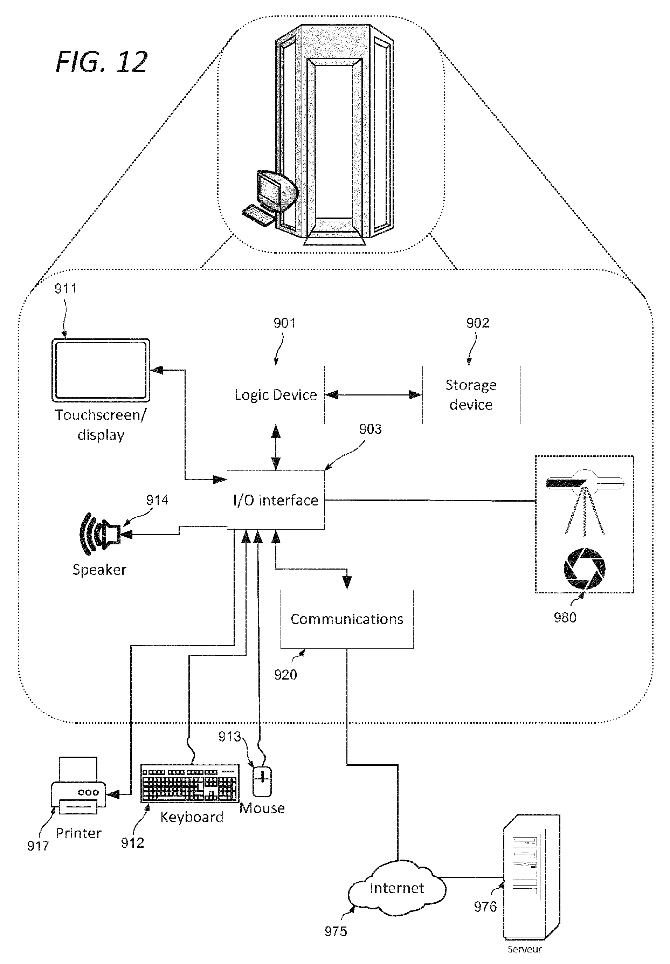

Figure 12 shows a body scanner system adaptable to constitute an embodiment. This is representative of the devices used in airports and the like for scanning individuals for concealed weapons or contraband. As shown in figure 11, object scanner system comprises elements 901, 902, 903, 920, 912, 913, 914, as 917 as described above. It may be in communication with a server 976 via the network 975. The device is also in communication with the scanner hardware 980.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method of controlling the display of representation of a plurality of datasets, said method comprising the steps of:
establishing a scale mapping to said plurality of datasets, with each said dataset being associated with a respective dataset position on said scale,
receiving a user input specifying a position in said scale,
determining whether said specified position is within a predetermined region associated with any one of said respective dataset positions,
in a case where said specified position does not fall within any said predetermined region, interpolating between two datasets associated with the positions on either side of said user input, and displaying a graphical representation of said interpolated dataset, or otherwise
displaying a graphical representation of said dataset associated with said predetermined region within which said first user input lies.

2. The method of claim 1 wherein said plurality of datasets are snapshots of previous images displayed to a user.

3. The method of claim 1 wherein said plurality of datasets comprise a sequential set, and wherein said scale maps to said plurality of datasets in the same sequence as the sequence of said datasets.

4. The method of any of claims 1 or 2 wherein said scale is two dimensional.

5. the method of claim 4 wherein said plurality of datasets comprise a set reflecting sequences of values for two variables, and wherein said scale maps said plurality of datasets to said scale in a first dimension according to the respective value of each dataset for a first said variable, and wherein said scale maps said plurality of datasets to said scale in a second dimension according to the respective value of each dataset for a second said variable.

6. The method of any of claims 1 or 2 wherein said scale is three dimensional.

7. The method of claim 6 wherein said plurality of datasets comprise a set reflecting sequences of values for three variables, and wherein said scale maps said plurality of datasets to said scale in a first dimension according to the respective value of each dataset for a first said variable, wherein said scale maps said plurality of datasets to said scale in a second dimension according to the respective value of each dataset for a second said variable, and wherein said scale maps said plurality of datasets to said scale in a third dimension according to the respective value of each dataset for a third said variable.

8. The method of any preceding claim wherein said first user input is provided via a slider bar type graphical user interface widget.

9. The method of claim 8 wherein said slider bar type graphical user interface widget furthermore exhibits a plurality of discrete positions, each said discrete position corresponding to the center of a respective predetermined region associated with a respective said representation.

10. The method of claim 9 whereby a "click" operation on said slider bar type graphical user interface widget is translated into a first user input value corresponding to the position of whichever said discrete position is closest to the location of said click operation, and a "click and slide" operation on said slider permits the selection of any position on said slider bar type graphical user interface widget is translated into a first user input value corresponding to the position on said slider at which said click and slide operation terminates.

11. A computer program adapted to implement the steps of any of claims 1 to 10.

12. A computer readable medium incorporating the computer program of claim 11.

13. A graphical user interface widget for controlling the display of representation of a plurality of datasets, said graphical user interface representing a scale mapping to said plurality of datasets, with each said dataset being associated with a respective dataset position on said scale, said graphical user interface widget being responsive to user inputs to specifying a position in said scale, whereby in a case where said specified position does not fall within any predetermined region associated with any one of said respective dataset positions, prompting an interpolation between two datasets associated with the positions on either side of said user input, and the displaying of a graphical representation of said interpolated dataset, or otherwise, prompting the display a graphical representation of said dataset associated with said predetermined region within which said first user input lies.
